(19) Europäisches Patentamt
European Patent Office
Office européen des brevets

(11) **EP 4 664 365 A1**

(12) **EUROPEAN PATENT APPLICATION**

(43) Date of publication:
**17.12.2025 Bulletin 2025/51**

(21) Application number: **24305920.1**

(22) Date of filing: **11.06.2024**

(51) International Patent Classification (IPC):
***G06N 10/20*** (2022.01)   ***G06N 10/60*** (2022.01)

(52) Cooperative Patent Classification (CPC):
**G06N 10/60; G06N 10/20**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Bull SAS**
**78340 Les Clayes-sous-Bois (FR)**

(72) Inventors:
• **OLIVA, Maxime**
  **78340 LES CLAYES SOUS BOIS (FR)**
• **BEN SLAMA, Ghada**
  **75016 PARIS (FR)**

(74) Representative: **Plasseraud IP**
**104 Rue de Richelieu**
**CS92104**
**75080 Paris Cedex 02 (FR)**

(54) **METHOD FOR ITERATIVELY CONVERTING AN INPUT QUANTUM CIRCUIT INTO A PLURALITY OF OUTPUT QUANTUM SUB-CIRCUITS WITH A NUMBER OF QUBITS LOWER THAN A MAXIMUM ALLOWED NUMBER OF QUBITS**

(57)    A method for converting an input quantum circuit with N qubits into output quantum sub-circuits with a number of qubits $N_{max} < N$, comprises:
a. converting the input quantum circuit into a graph;
b. executing a community detection algorithm to divide the graph into communities;
c. mapping the graph into a circuit flow network comprising a source node connected to nodes of a first community and a sink node connected to nodes of a second community;

d. adjusting capacity of edges in the circuit flow network and identifying at least one cut location between the source node and the sink node using a max-flow min-cut algorithm;
e. cutting the graph at said cut location(s) to obtain sub-circuits with at most $N_c < N$ qubits;
f. for each obtained sub-circuit, reiterating steps /a/ - /e/ using the obtained sub-circuit as input quantum circuit, until each sub-circuit obtained at step /e/ is an output sub-circuit with a number of qubits $N_c \leq N_{max}$.

[Fig. 4]

**Description**

The present disclosure generally relates to the field of quantum computing, and notably to a circuit-cutting method for simulating quantum circuits involving many logical qubits, using only a few physical qubits.

**Technical background**

A quantum program corresponds to sequences of instructions, called quantum gates, to be executed on one or more qubits, also referred to as "physical qubits", i.e. actual quantum implementations qubits. A quantum program may be represented by a quantum circuit, wherein the representation of qubits in a quantum circuit may be referred to as "logical qubits".

Quantum circuits with large number of qubits are hard to simulate, and their execution on real hardware may be impeded by size constraints. Indeed, existing quantum computers are limited as regards the number of physical qubits they comprise. Moreover, physical qubits and quantum gates are noisy, and thereby limit the depth of the circuits running on current quantum devices.

While increasing the number of qubits and their fidelity is a main focus of the quantum computing community, a technique called circuit "cutting" (or "knitting") can be used to artificially increase the number of qubits a quantum computer can execute at the expense of additional quantum circuit executions.

Indeed, quantum computing relies on executing quantum circuits. Quantum circuits can be seen as a standardized way of evolving a quantum state $\psi >$ for specific purposes. A quantum circuit is composed of "gates", which are the circuit building blocks. These gates are essentially the basic and standardized instructions received by the quantum computer. A quantum circuit is then a series of quantum gates applied on some specific qubits of the quantum computer.

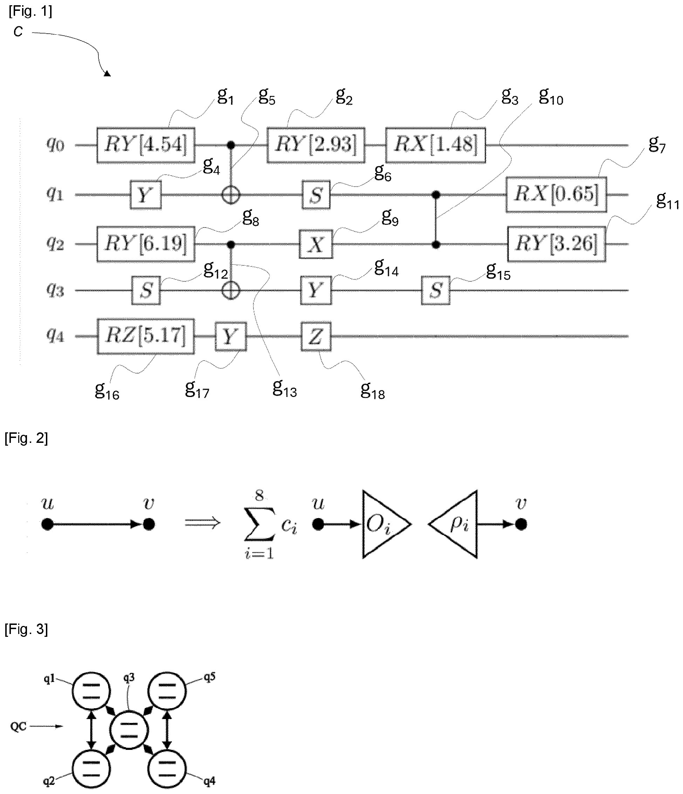

Figure 1 illustrates an example of quantum circuit $C_{\square}$, comprising both one-qubit quantum gates and two-qubits quantum gates, which are applied on qubits $q_0$ to $q_4$. Indeed, any quantum circuit can be decomposed into a sequence of Pauli rotations followed by a Clifford operator. Each quantum gate in the quantum circuit shown in figure 1 comprises a Pauli-rotation. Some quantum gates are single-qubit Pauli rotations, i.e., quantum gates that act on one single qubit. For example, quantum gate referenced $g_4$ represents a Pauli-rotation around the Y-axis acting on the second qubit $q_1$. Quantum gates referenced gs, $g_{10}$ and $g_{13}$ show two-qubit Pauli-rotations.

Mathematically, quantum circuits represent a unitary transformation of a quantum state vector $\psi >$. Hence, the transformation $\psi > \rightarrow v\,\psi ' >$ implemented by a quantum circuit can be written as: $\psi ' \geq U v\,\psi >$. The size of the quantum circuit which may be executed depends on how many qubits the quantum computer supports. However, circuit cutting (or knitting) intends to decompose a large quantum circuit into smaller pieces, implement each piece independently and finally use classical computers to combine the results. It thus offers a valuable alternative, allowing bigger quantum circuits to be executed on comparatively smaller quantum machines.

The circuit-cutting theory has been discussed by Peng, T., Harrow, A., Ozols, M. & Wu, X. in "Simulating Large Quantum Circuits on a Small Quantum Computer", Phys. Rev. Lett. 125, 150504 (2020), and is further recalled below.

Let us consider a 2-level quantum system described by the density matrix $\rho$. The quantum state $\rho$ can be expressed as a linear combination of Pauli matrices:

$$\rho = \tfrac{1}{2}\sum_{i=1}^{8} c_i Tr(\rho O_i)\rho_i,$$

where $O_i$ are Pauli matrices, $\rho_i$ are their eigen-projectors, and $c_i$ their corresponding eigenvalues.

We define the Pauli matrices as:

$$O_1 = O_2 = I,$$

$$O_3 = O_4 = X,$$

$$O_5 = O_6 = Y,$$

$$O_7 = O_8 = Z;$$

and $\rho_i$ as:

$$\rho_1 = \rho_7 = |0\rangle\langle 0|,$$

$$\rho_2 = \rho_8 = |1\rangle\langle 1|,$$

$$\rho_3 =,$$

$$\rho_4 =,$$

$$\rho_5 = |+i\rangle\langle +i|,$$

$$\rho_6 = |-i\rangle\langle -i|.$$

Finally:

$$c_1 = c_2 = 1$$

$$c_3 = c_5 = \frac{1}{2}$$

$$c_4 = c_6 = \frac{-1}{2}.$$

Essentially, each $\rho_i$ corresponds to a certain state preparation, while each $Tr(\rho O_i)$ is the expectation value of $O_i$ when the system is in the state $\rho$. The basic idea of cutting large quantum circuits is to cut a qubit wire and then simulate the propagation of quantum information by classical means. Indeed, if the circuit is cut, a fictitious state must be generated upstream of the cut, which will supply the circuit downstream of the cut.

Figure 2 illustrates an example of wire cut between $\mu$ and $v$. Using the above circuit-cutting theory, we can cut the wire of a quantum circuit between $\mu$ and $v$, at the cost of having to execute eight other quantum sub-circuits $c_i$, yet with a reduced number of qubits. For more general and larger quantum circuits, one can apply this cutting scheme iteratively to multiple cutting points, to partition the whole circuit $C_\square$ into several disconnected pieces of subcircuits. By running the subcircuits independently, and classically combining the subcircuit expectations with appropriate coefficients $c_i$, expectations from the large quantum circuits can be obtained.

This original circuit-cutting method has been improved by Ying, C. et al. in "Experimental Simulation of Larger Quantum Circuits with Fewer Superconducting Qubits", Phys. Rev. Lett. 130, 110601 (2023), which discloses an improved version of the circuit-cutting theory allowing to cut the wire of a quantum circuit at the cost of having to execute only six quantum subcircuits, instead of eight.

More generally, considering a circuit-cutting method which would require execution of $n \leq 8$ quantum sub-circuits, the final execution of the resulting sub-circuits scales as $O(n^k \times 2^{Nmax})$, with $k$ the total number of cuts and $N_{max}$ the maximum number of qubits encountered in the sub-circuits to execute.

Knowing this, the challenge is to minimize the number of cuts k required to attain a maximum allowed number of qubits $N_{max}$ in the sub-circuits. Indeed, without circuit-cutting, the complexity associated with execution of a quantum circuit with N qubits scales as $O(2^N)$. For a given quantum circuits with N qubits, it would therefore be interesting to find values for the number of cuts k to attain a maximum allowed number of qubits $N_{max}$ in the sub-circuits such that the complexity of execution as $O(n^k \times 2^{Nmax})$ be lower than the complexity of execution as $O(2^N)$.

However, current circuit-cutting methods rely on manually selecting the cut locations, which works only for specific quantum circuits. As acknowledged by Ying, C. et al. in "Experimental Simulation of Larger Quantum Circuits with Fewer Superconducting Qubits", Phys. Rev. Lett. 130, 110601 (2023), there is no general method for determining the optimal cutting points for the time being.

Therefore, there is a need for an automatic and general way of tackling this challenge. More precisely, there is a need for a method for selecting appropriate cut locations in an input quantum circuit C for cutting the input circuit C into a set of output quantum sub-circuits comprising a maximum allowed number of qubits $N_{max}$. There is a need for such a method which would allow executing the input quantum circuit C with a number N of qubits on a quantum computer with a number of qubits $N_{max} < N$, by executing the output quantum sub-circuits with $N_{max}$ qubits and classically combining their results.

## Summary

The present disclosure fulfils this need and proposes a method for iteratively converting an input quantum circuit with N qubits into a plurality of output quantum sub-circuits with a number of qubits lower than a maximum allowed number of qubits $N_{max} < N$, the method comprising:

a. converting the input quantum circuit $C$ into a graph $C_g$ comprising end nodes representative of the N qubits, intermediate nodes representative of two-qubits quantum gates and edges representative of interactions between the qubits and the two-qubits quantum gates;

b. executing a community detection algorithm to divide the graph $C_g$ into at least two communities, wherein a community is defined by a set of nodes which are densely interconnected;

c. mapping the graph $C_g$ into a circuit flow network comprising at least one source node connected to end nodes belonging to a first of the communities and at least one sink node connected to end nodes belonging to a second of the communities, wherein edges of the circuit flow network receive a flow and have a capacity defined as a maximum value allowed for the flow on this edge;

d. adjusting capacity of the edges in the circuit flow network and identifying at least one cut location within the circuit flow network between the at least one source node and the at least one sink node using a max-flow min-cut algorithm;

e. cutting the graph at the identified cut location(s) to obtain at least two sub-circuits with at most $N_c < N$ qubits;

f. for each obtained sub-circuit, reiterating steps /a/ - /e/ using the obtained sub-circuit as input quantum circuit, until each sub-circuit obtained at step /e/ is an output sub-circuit with a number of qubits $N_c \leq N_{max}$.

According to an aspect, the method further comprises executing the plurality of output quantum sub-circuits with a number of qubits $N_c \leq N_{max}$ on a quantum computer with a number of qubits $N_{max} < N$ to execute the input quantum circuit with N qubits.
According to another aspect, capacities of the edges in the circuit flow network are adjusted empirically to reduce a number of cuts needed for lowering the number of qubits in the sub-circuits.
According to an alternate aspect, capacities of the edges in the circuit flow network are proportional to entanglement entropy.
According to a further aspect, qubits from said at least two communities are used as said at least one source node and said at least one sink node and step /d/ comprises identifying at least one cut location using a multi-source multi-sink max-flow min-cut algorithm.
According to yet a further aspect, the community detection algorithm is a Fluid Communities, FluidC, algorithm.
According to an embodiment, at step /b/, the graph is divided into two communities and at step /c/, the graph is mapped into a circuit flow network comprising one source node connected to nodes belonging to a first of said two communities and one sink node connected to nodes belonging to a second of said two communities.
According to another aspect, the present disclosure proposes a non-transitory computer readable storage medium, having stored thereon a computer program comprising program instructions, the computer program being loadable into a data-processing unit and adapted to cause the data-processing unit to carry out a method for iteratively converting an input quantum circuit with N qubits into a plurality of output quantum sub-circuits with a number of qubits lower than a maximum allowed number of qubits $N_{max} < N$ as described in the present disclosure.

## Brief Description of Drawings

Other features, details and advantages will be shown in the following detailed description and on the figures, on which:

**Fig. 1**
[Fig. 1] shows a quantum circuit comprising a series of quantum gates.

**Fig. 2**
[Fig. 2] illustrates a wire cut in a quantum circuit.

**Fig. 3**

[Fig. 3] is a schematic representation of a five-qubit device.

**Fig. 4**

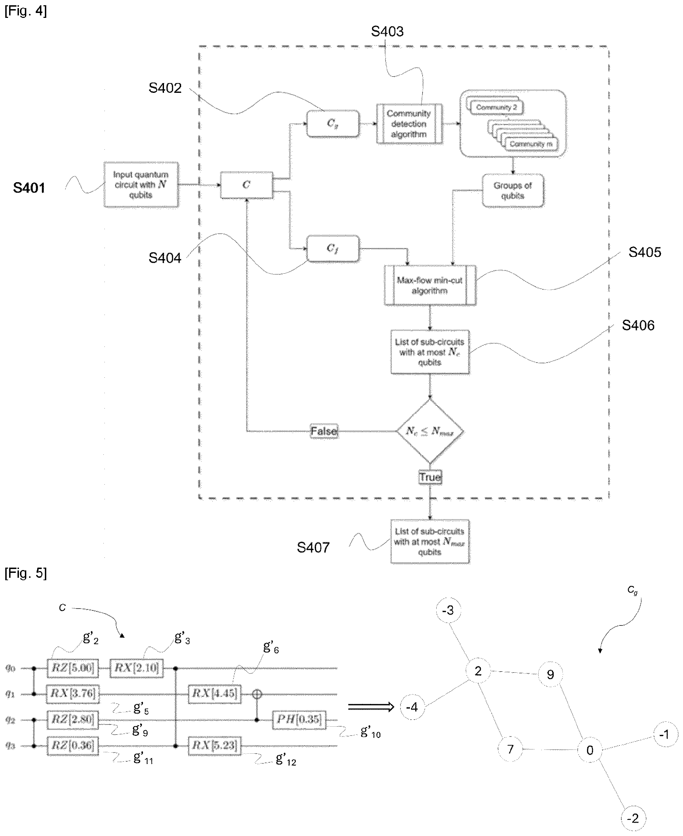

[Fig. 4] shows an organigram of a method for iteratively converting an input quantum circuit with N qubits into a plurality of output quantum sub-circuits with a number of qubits lower than a maximum allowed number of qubits $N_{max} < N$ according to an embodiment illustrates an example of mapping the quantum circuit of Fig. 2 into a graph.

**Fig. 5**

[Fig. 5] illustrates an example of mapping an input quantum circuit into a graph.

**Fig. 6**

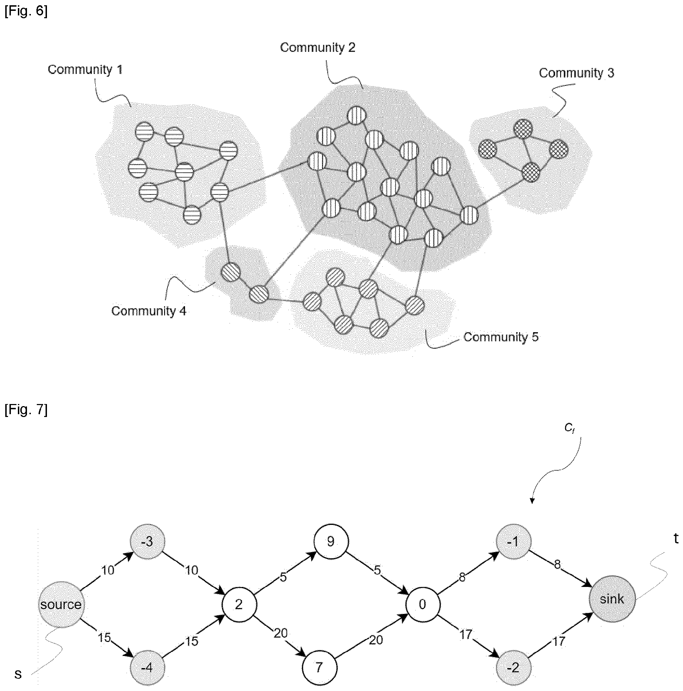

[Fig. 6] illustrates an example of executing a community detection algorithm in a graph circuit.

**Fig. 7**

[Fig. 7] provides an example of a flow network with capacities derived from the graph of Fig. 5.

**Fig. 8**

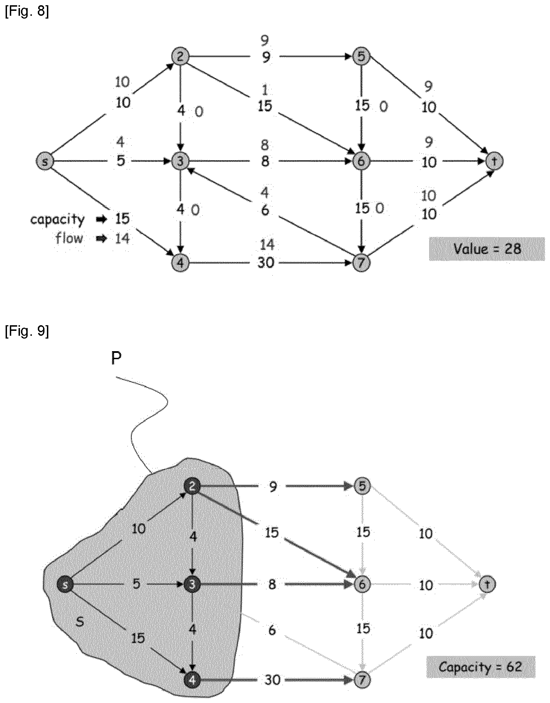

[Fig. 8] provides an example of a maximum flow in a flow network.

**Fig. 9**

[Fig. 9] illustrates how the capacity of a partition is calculated in the flow network of Fig. 8.

**Fig. 10**

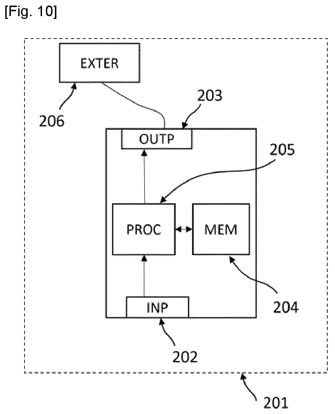

[Fig. 10] shows a non-transitory computer readable storage medium configured to implement a method for iteratively converting an input quantum circuit with N qubits into a plurality of output quantum sub-circuits with a number of qubits lower than a maximum allowed number of qubits $N_{max} < N$ according to an embodiment.

## Description of Embodiments

The general principle of the present disclosure relies on a new and general approach to circuit cutting which automatically selects the cut locations based on an upper bound on the number of qubits of the resulting quantum sub-circuits. It relies on designing an algorithm which takes as input a quantum circuit $C$ and a maximum allowed number of qubits $N_{max}$ on the subsequent quantum sub-circuits to execute. Several non-limiting embodiments are presented hereafter.

In an example, the input quantum circuit $C$ of figure 1 must be executed on a quantum computer comprising only $N_{max} = 5$ qubits. Figure 3 is a schematic representation of a five-qubit device QC, which may be a specific embodiment of hardware of such a quantum computer.

The five-qubit device QC comprises five physical qubits some of which are interconnected. Physical qubits are actual quantum implementations of qubits. The first, second, fourth and fifth qubits $q_1$, $q_2$, $q_4$, $q_5$ are directly connected to the third qubit $q_3$. However, the first and second qubits $q_1$, $q_2$ have no mutual connections with the fourth and fifth qubits, $q_4$, $q_5$.

Using the circuit-cutting theory, it is possible to decompose the large quantum circuit $C$ into smaller sub-circuits, implement each sub-circuit independently on the quantum computer QC of Figure 3 and finally use classical computers to combine the results.

Fig. 4 shows an organigram of a method for automatically identifying appropriate cut locations in an input quantum circuit, given a maximum allowed number of qubits $N_{max}$ on the output quantum sub-circuits to execute.

At step S401, the algorithm takes as input a circuit $C$ with N qubits (for example, the input quantum circuit of Fig. 1), and a maximum allowed number of qubits $N_{max} < N$ the output sub-circuits should have at most (for example $N_{max} = 5$).

The iterative process of Fig. 4 is repeated until all the output sub-circuits obtained after cut at step S407 have a number of qubits $N_c$ smaller than $N_{max}$.

To this purpose, the input quantum circuit $C$ is converted into a graph $C_g$ at step S402.

Step S402 is further illustrated in relation to Fig. 5, in relation to an input quantum circuit $C$, which is a graphical representation of a quantum program. The input quantum circuit C is composed of quantum gates $g'_1$ to $g'_{12}$ to be applied to a set of four qubits $q_0$, $q_1$, $q_2$, and $q_3$. Quantum circuits are written such that the horizontal axis is time. The quantum circuit starts at the left side and ends at the right. Horizontal lines are qubits. The quantum gates appear in the quantum circuit in a sequence in an execution order, which corresponds to the order according to which the quantum gates are applied to the qubits over time. Quantum gates that are executed subsequently correspond to a multiplication of quantum unitary operators representing these quantum gates.

Hereafter, the expressions "gate" and "operator" are used as synonyms, since they both refer to the same operation.

The execution of a quantum program comprises the execution of the quantum gates of the quantum circuit, and a final measurement. The final measurement allows determining a state of the physical qubits resulting from the quantum gates applied to them.

The representation of qubits $q_0 >$, $q_1 >$, $q_2 >$, $q_3 >$ in the quantum circuit $C$ is referred to as "logical qubits". In the specific implementation of Fig. 5, the fifth physical qubit $q_4$ of the device QC of Fig. 3 has (in this specific implementation) no counterpart in the quantum circuit $C$.

Step S402 relies on representing the input quantum circuit $C$ as a graph. In graph $C_g$, the end nodes, which are shown as solid lines (-1, -2, -3 and -4), denote the qubits $q_0 >$, $q_1 >$, $q_2 >$, $q_3 >$, while the intermediate nodes, which are shown as dashed lines (0, 2, 7, 9), denote the two-qubits quantum gates $g'_1, g'_8, g'_4$ and $g'_7$. The edges between the nodes represent the interactions between qubits and gates. One-qubit gates are ignored in the graph representation $C_g$ as they do not impact the cut locations. Indeed, they do not induce entanglement.

Using the representation $C_g$ of Fig. 5, the goal is to find cut locations within the graph which separate the graph $C_g$ into smaller graphs in as few cuts as possible, while also minimizing the qubit support of the resulting sub-graphs.

At step S403, a community detection algorithm is used on graph $C_g$ to locate several communities (Community 1, Community 2, ...., Community m) in the graph circuit $C_g$.

Fig. 6 illustrates an example of executing a community detection algorithm in a graph circuit. For illustrative purpose, and to help better understand the notion of community detection, Fig. 6 is described in relation to a more complex graph circuit $C_g$ than the one of Fig. 5, comprising a greater number of nodes.

A community detection algorithm is a propagation-based algorithm capable of identifying a variable number of communities in a network. Communities are typically defined by sets of vertices densely interconnected internally. In the example of Fig. 6, five communities referenced Community 1 to Community 5 are identified in the sets of nodes of the illustrated graph.

Any community detection algorithm may be used at step 403, such as "Edge Betweenness", "Fast greedy", "Infomap", "Label Propagation", "Leading Eigenvector", "Multilevel", "Spinglass" or "Walktrap" which are discussed and compared by Yang et al. in "A comparative analysis of community detection algorithms on artificial networks", Scientific Reports 6, 2016. Such community detection algorithms allow finding any number m of communities in the graph $C_g$.

However, in an embodiment, step S403 uses the Fluid Communities (FluidC) algorithm disclosed by Parés et al. in "Fluid Communities: A Competitive, Scalable and Diverse Community Detection Algorithm", 2017. The FluidC algorithm is a Community Detection algorithm based on the idea of introducing a number of fluids (i.e., communities) within a non-homogeneous environment (i.e., a non-complete graph), where fluids will expand and push each other influenced by the topology of the environment until a stable state is reached. The FluidC algorithm takes as input the number of communities which needs to be found in the graph. FluidC allows for the definition of the number of communities to be found, simply by initializing a different number of fluids in the graph. Each community is initialized in a different and random vertex, or node, in the graph $C_g$. Each initialized community has an associated density $d$ within the range (0,1]. The density of a community is then defined as the inverse of the number of nodes composing said community. The FluidC algorithm then iterates over all vertices in random order, updating the community each vertex belongs to using an update rule. When the assignment of vertices to communities does not change on two consecutive steps, the algorithm has converged and ends.

Hence, in this embodiment, the choice is made to look for only two communities in the graph $C_g$. Since a community is defined by a densely connected partition of a graph, finding two of them allows to find the part of the graph $C_g$ where the number of connections between each community is reduced.

The obtained communities, which may be seen as groups of qubits, are used as inputs for a max-flow min-cut algorithm executed at step S405.

A quantum circuit $C$ can also be mapped into a flow network $C_f$ as shown at step S404. Flow networks are directed graphs where each edge has a capacity and receives a flow. The capacity is the maximum value allowed for the flow on that edge. Flow networks contain a source $s$ and a sink $t$.

Fig. 7 provides an example of a flow network with capacities, derived from the graph $C_g$ of Fig. 5. The flow network $C_f$ provided as an example on Fig. 7 comprises the eight nodes of graph $C_g$, namely the end nodes, referenced as (-1, -2, -3 and -4) (corresponding to the qubits) and the intermediate nodes, referenced as (0, 2, 7, 9) (corresponding to the two-qubits quantum gates), with two additional nodes: a source node $s$ connected to the qubits belonging to a first community, and a sink node $t$ connected to the qubits belonging to the second community.

For example, the capacity of the edge linking the source node $s$ to the node referenced -3 is ten; the capacity of the edge linking the source node $s$ to the node referenced -4 is fifteen.

The maximum flow problem is an optimization problem, which goal is to assign a flow to each edge in the flow network $C_f$, such that the total flow is maximum between the source $s$ and the sink $t$.

Fig. 8 provides an example of a maximum flow in a flow network comprising six nodes referenced 2 to 7, a source node s and a sink node t. The flow is limited by the capacity of the edge. When a flow inputs a node, it is distributed at the node's output on the various output edges, so that the value of the incoming flow is equal to the sum of the values of the output flows on these output edges. With the flow values illustrated in Fig. 8, the total flow from the source s to the sink t has a value of twenty-eight.

Another problem which uses the flow network graph representation of Fig. 7 is the minimum cut problem. We call a partition a set of connected nodes in the flow network $C_f$. The capacity of a partition is the sum of the capacities of its exiting edges. Fig. 9 illustrates how the capacity of a partition is calculated in the flow network of Fig. 8.

On Fig. 9, the partition P comprises the source node s and the nodes referenced 2, 3 and 4. The node referenced 2 has two exiting edges with capacities nine and fifteen. The node referenced 3 has one exiting edge with capacity eight. The node referenced 4 has one exiting edge with capacity thirty. The capacity of partition P is hence equal to sixty-two (62=9+15+8+30).

A minimum cut of such a directed graph is a cut where the sum of the capacities for the edges to be cut is minimum. The two partitions must contain either the source node or the sink node. Hence, a first partition comprises the source node and the nodes belonging to the first community identified at step S403, and the second partition comprises the sink node and the nodes belonging to the second community.

Merging these two problems, one can define the max-flow min-cut theorem, which states that in a flow network, the maximum amount of flow passing from the source to the sink is equal to the weight of the edges in a minimum cut, as demonstrated by L. R. Ford Jr. and D. R. Fulkerson in 1962, in "Flows in Networks", R-375-PR (see Theorem 5.1).

At step S405, the max-flow min-cut algorithm is executed, using as inputs both the two communities identified at step S403 and the flow network $C_f$ derived from the input quantum circuit C. By selecting appropriate edges capacities, it allows to efficiently select cut locations between both partitions, that optimally separate the flow network $C_f$.

In an embodiment, the capacities of the edges are chosen empirically such that the number of cuts needed for lowering the number of qubits in the resulting sub-circuits is reduced.

In another embodiment, the capacities of the edges are chosen so as to be proportional to the entanglement entropy, which allows minimizing the number of cuts. Indeed, the capacities can be linked to the entanglement entropy between two qubits. To illustrate this, cutting a wire between two qubits with a very small entanglement entropy would be very easy (i.e. would not imply losing too much information). This would be reflected in the max flow min cut algorithm by capacities being small, meaning these cuts are not overly important for the maximization of the flow. Finding the minimum cut of a circuit basically amounts to finding a cut which does not cut harshly the system so as to preserve the entanglement between qubits as best as possible. Since the entanglement entropy between two qubits is very much correlated to the number of two-qubits gates applied to them, using a community detection algorithm is a very good candidate for finding the minimum cut of a circuit. Indeed, it allows finding zones of lower density in the graph (between two communities), which should be where the entanglement entropy is smaller, which should be the optimum location for a cut.

There are several known techniques to compute qubit to qubit entanglement entropy. As an example, an embodiment can consist in doing a Matrix Product States simulation of the circuit, and, at every application of a two-qubit gate, compute the entanglement entropy. The capacity of the circuit flow network can then be chosen based on the computed entanglement entropy. It thus allows to optimize further and in a more physical manner the max flow min cut algorithm.

At step S406, the flow network $C_f$ is cut at the obtained cut locations, which provides a set of output sub-circuits with at most $N_c < N$ qubits. If $N_c \leq N_{max}$ for all the output sub-circuits thus obtained, the algorithm outputs at step S407 a list of sub-circuits required to execute the initial input quantum circuit C on a quantum computer (for example the quantum device of Fig. 3) with a number of qubits $N_{max} < N$. Otherwise, this process is repeated again, taking each output sub-circuit obtained at step S406 as the new circuit C to cut. Steps S402 to S406 are then repeated again for each output sub-circuit obtained at step S406 with a number of qubits $N_c > N_{max}$.

When the algorithm ends, step S407 provides a list of output sub-circuits which can be executed on a quantum computer and processed following the circuit cutting theory mentioned above.

In an alternate embodiment in which $m > 2$ communities are identified at step S403, the max-flow min-cut algorithm executed at step S405 is a somewhat more complex algorithm allowing to solve a multi-source multi-sink max-flow min-cut problem. Indeed, instead of adding additional nodes as source and sink nodes to the flow network $C_f$, qubits from each of the $m > 2$ communities can be used as source and sink directly. The problem to be solved becomes a multi-source multi-sink problem. The multi-source multi-sink problem allows for the inclusion of several sources and several sinks. It is therefore possible to choose a community detection algorithm that infers by itself the number of communities, regroup the qubits based on that, and connect them all to a sink and a source. The multi sink max flow min cut algorithm will then cut automatically in such a way that it separates the communities directly. The cuts required to separate the graph into subgraphs optimally would then be obtained directly, without a need for iterating steps S402 to S406. Indeed, the sub-circuits obtained at step S406 would already have a number of qubits lower than the maximum allowed number of qubits.

For simplicity, and because the algorithm still sums up to finding communities in the quantum circuit graph $C_g$, mapping it into a suited flow network $C_f$ and using the max-flow min-cut theorem to find the cut locations, the embodiment described in detail in relation to figures 4 to 9 is the simplest version of the algorithm, corresponding to the case of two communities. The skilled person can easily adapt this embodiment to the case when the community detection algorithm at step S403 can find any number of communities, and when the max-flow min-cut algorithm at step S405 allows solving a multi-source multi-sink problem to find the cut locations in the flow network $C_f$.

The method described in relation to figures 4 to 9 is an automatic circuit cutting algorithm, allowing to detect if an input quantum circuit is easily separable and to cut it accordingly such that the required number of cuts is minimized. For a given quantum circuit with N qubits, it allows finding values for the number of cuts $k$ to attain a maximum allowed number of qubits $N_{max}$ in the sub-circuits such that the complexity of execution as $O(n^k \times 2^{Nmax})$ is lower than the complexity of execution as $O(2^N)$, where n is the number of sub-circuits.

Surprisingly, when the input quantum circuit requires a small number of cuts, the described method outperforms state of the art methods in terms of both number of cuts and processing time. Expanding upon this method will lead to substantial improvements which may rival or beat more complex methods for all quantum circuits and for a fraction of the processing time.

Fig. 10 shows a non-transitory computer readable storage medium 201 configured to implement the method of the present disclosure.

The non-transitory computer readable storage medium 201 may comprise a memory 204 for storing instructions for implementation of at least part of the method, the data received, and temporary data for performing the various steps and operations of the method.

The non-transitory computer readable storage medium 201 further comprises a control circuit 205.

This control circuit can be, for example, a processor or processing unit adapted to interpret instructions in the form of a computer program in a computer language, wherein the processor or the processing unit may comprise, may be associated with or be attached to a memory comprising the instructions. The control circuit can further be the association of a processor / processing unit and a memory, the processor or the processing unit being adapted to interpret instructions in a computer language, the memory comprising the instructions. The control circuit can further be an electronic card which steps and operations of the method are described in silicon, or a programmable electronic chip such as an FPGA for "Field-Programmable Gate Array", as a SOC for "System On Chip" or as an ASIC for "Application Specific Integrated Circuit".

SOCs or systems-on-chips are embedded systems that integrate all the components of an electronic system into a single chip. An ASIC is a dedicated electronic circuit that brings together custom features for a given application. ASICs are generally configured during their manufacture for performing a dedicated task. The programmable logic circuits of the FPGA type are electronic circuits reconfigurable by the user of the method.

This non-transitory computer readable storage medium 201 comprises an input interface 202 for receiving messages, and an output interface 203 for providing configuration messages controlling any components involved in the implementation of the claimed method.

Depending on the embodiment, the non-transitory computer readable storage medium 201 may be a computer, a computer network, an electronic component, or another device comprising a processor operatively coupled to a memory 204, and, depending on the mode of operation or selected embodiment, a data storage unit, and other associated hardware elements such as a network interface and a media reader for reading a removable storage medium 206 and writing on such a medium not shown in the fig. 5. The removable storage medium may be, for example, a flash disk, a USB stick, etc.

The memory 204, the data storage unit or the removable storage medium may contain instructions which, when executed by the control circuit 205, may cause this control circuit 205 to perform or control the input interfaces, output interface 203, data storage in the memory 204 and/ or data processing and method implementation examples described herein.

In addition, the instructions can be implemented in software form, in which case it takes the form of a program executable by a processor, or in hardware form, or "hardware", as an integrated circuit specific application ASIC, a SOC on a microchip, or in the form of a combination of hardware and software elements, for example a software program intended to be loaded and executed on an electronic component described above such as FPGA processor.

The non-transitory computer readable storage medium 201 can also use hybrid architectures, for example architectures based on a CPU + FPGA, or an MPPA for "Multi-Purpose Processor Array".

This disclosure is not limited to the system, method and computer program described here, which are only examples. The invention encompasses every alternative that a person skilled in the art would envisage when reading this text. Notably, all the embodiments described in the present disclosure may be combined in all or in part in accordance with the scope of the appended claims.

**Non-patent literature:**

- Peng, T., Harrow, A., Ozols, M. & Wu, X. in "Simulating Large Quantum Circuits on a Small Quantum Computer", Phys. Rev. Lett. 125, 150504 (2020);

- Ying, C. et al. in "Experimental Simulation of Larger Quantum Circuits with Fewer Superconducting Qubits", Phys. Rev. Lett. 130, 110601 (2023);

- Yang et al. in "A comparative analysis of community detection algorithms on artificial networks", Scientific Reports 6, 2016;

- Parés et al. in "Fluid Communities: A Competitive, Scalable and Diverse Community Detection Algorithm", 2017;

- L. R. Ford Jr. and D. R. Fulkerson, 1962, "Flows in Networks", R-375-PR, Princeton University Press.

**Claims**

1. A method for iteratively converting an input quantum circuit ($C$ with N qubits into a plurality of output quantum sub-circuits with a number of qubits lower than a maximum allowed number of qubits $N_{max} < N,$ said method comprising:

   a. converting (S402) said input quantum circuit into a graph ($C_g$) comprising end nodes representative of said N qubits, intermediate nodes representative of two-qubits quantum gates and edges representative of interactions between said qubits and said two-qubits quantum gates;
   b. executing (S403) a community detection algorithm to divide said graph into at least two communities, wherein a community is defined by a set of nodes which are densely interconnected;
   c. mapping (S404) said graph into a circuit flow network ($C_f$) comprising at least one source node connected to end nodes belonging to a first of said at least two communities and at least one sink node connected to end nodes belonging to a second of said at least two communities, wherein edges of said circuit flow network receive a flow and have a capacity defined as a maximum value allowed for said flow on said edge;
   d. adjusting capacity of said edges in said circuit flow network and identifying (S405) at least one cut location within said circuit flow network between said at least one source node and said at least one sink node using a max-flow min-cut algorithm;
   e. cutting (S406) said graph at said at least one cut location to obtain at least two sub-circuits with at most $N_c < N$ qubits;
   f. for each obtained sub-circuit, reiterating steps /a/ - /e/ using said obtained sub-circuit as said input quantum circuit, until each sub-circuit obtained at step /e/ is an output sub-circuit with a number of qubits $N_c \leq N_{max}.$

2. The method of claim 1, further comprising executing said plurality of output quantum sub-circuits with a number of qubits $N_c \leq N_{max}$ on a quantum computer with a number of qubits $N_{max} < N$ to execute said input quantum circuit with N qubits.

3. The method of any of claims 1 and 2, wherein capacities of said edges in said circuit flow network are adjusted empirically to reduce a number of cuts needed for lowering said number of qubits in said sub-circuits.

4. The method of any of claims 1 and 2, wherein capacities of said edges in said circuit flow network are proportional to entanglement entropy.

5. The method of any of claims 1 to 4, wherein qubits from said at least two communities are used as said at least one source node and said at least one sink node and wherein step /d/ comprises identifying at least one cut location using a multi-source multi-sink max-flow min-cut algorithm.

6. The method of any of claims 1 to 4, wherein said community detection algorithm is a Fluid Communities, FluidC, algorithm.

7. The method of claim 6, wherein at step /b/, said graph is divided into two communities and wherein at step /c/, said graph is mapped into a circuit flow network comprising one source node connected to nodes belonging to a first of said two communities and one sink node connected to nodes belonging to a second of said two communities.

8. A non-transitory computer readable storage medium, having stored thereon a computer program comprising program instructions, the computer program being loadable into a data-processing unit and adapted to cause the data-processing unit to carry out a method for iteratively converting an input quantum circuit with N qubits into a plurality of output quantum sub-circuits with a number of qubits lower than a maximum allowed number of qubits $N_{max} < N$ according to any of claims 1 - 7.

[Fig. 1]

[Fig. 2]

[Fig. 3]

[Fig. 4]

[Fig. 5]

[Fig. 6]

[Fig. 7]

[Fig. 8]

[Fig. 9]

[Fig. 10]

Europäisches
Patentamt
European
Patent Office
Office européen
des brevets

**EUROPEAN SEARCH REPORT**

Application Number

EP 24 30 5920

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2024/107306 A2 (UNIV PRINCETON [US]) 23 May 2024 (2024-05-23) <br> * page 3, line 15 - page 3, line 19 * <br> * page 4, line 31 - page 5, line 4 * <br> * page 9, line 6 - page 9, line 9 * <br> * figures 7a-7d * <br> ----- | 1-8 | INV. <br> G06N10/20 <br> G06N10/60 |
| Y | US 2021/150400 A1 (PISTOIA MARCO [US] ET AL) 20 May 2021 (2021-05-20) <br> * paragraph [0039] * <br> ----- | 1-8 | |
| A | US 2021/289366 A1 (GINIS GEORGIOS [US] ET AL) 16 September 2021 (2021-09-16) <br> * paragraph [0209] * <br> ----- | 1-8 | |

TECHNICAL FIELDS
SEARCHED (IPC)

G06N

The present search report has been drawn up for all claims

| Place of search | Date of completion of the search | Examiner |
|---|---|---|
| The Hague | 20 December 2024 | Baldan, Marco |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    & : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 30 5920

This annex lists the patent family members relating to the patent documents cited in the above-mentioned European search report.
The members are as contained in the European Patent Office EDP file on
The European Patent Office is in no way liable for these particulars which are merely given for the purpose of information.

20-12-2024

| Patent document cited in search report | | Publication date | Patent family member(s) | | Publication date |
|---|---|---|---|---|---|
| WO 2024107306 | A2 | 23-05-2024 | NONE | | |
| US 2021150400 | A1 | 20-05-2021 | NONE | | |
| US 2021289366 | A1 | 16-09-2021 | CA | 3106147 A1 | 16-01-2020 |
| | | | EP | 3821632 A1 | 19-05-2021 |
| | | | US | 2021289366 A1 | 16-09-2021 |
| | | | WO | 2020014000 A1 | 16-01-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **PENG, T.** ; **HARROW, A.** ; **OZOLS, M.** ; **WU, X.** Simulating Large Quantum Circuits on a Small Quantum Computer. *Phys. Rev. Lett.*, 2020, vol. 125, 150504
- **YING, C. et al.** Experimental Simulation of Larger Quantum Circuits with Fewer Superconducting Qubits. *Phys. Rev. Lett.*, 2023, vol. 130, 110601
- **YANG et al.** A comparative analysis of community detection algorithms on artificial networks. *Scientific Reports*, 2016, vol. 6
- **PARÉS et al.** *Fluid Communities: A Competitive, Scalable and Diverse Community Detection Algorithm*, 2017
- Flows in Networks. **L. R. FORD JR.** ; **D. R. FULKERSON**. R-375-PR. Princeton University Press, 1962